# EUROPEAN PATENT SPECIFICATION

(11) **EP 1 838 573 B1**
(45) Date of publication and mention of the grant of the patent: **06.04.2016**
(21) Application number: 06733726.1
(22) Date of filing: 17.01.2006
(51) Int. Cl.: B64C 30/00, B64C 3/50

(54) **SUPERSONIC AIRCRAFT WITH ACTIVE LIFT DISTRIBUTION CONTROL FOR REDUCING SONIC BOOM**
ÜBERSCHALLFLUGZEUG MIT AKTIVER AUFTRIEBSVERTEILUNGSSTEUERUNG FÜR VERMINDERTEN ÜBERSCHALLKNALL
AVION SUPERSONIQUE AVEC COMMANDE DE DISTRIBUTION DE PORTANCE ACTIVE POUR REDUIRE LE BANG SONIQUE

(30) Priority: 19.01.2005 US 39651
(43) Date of publication of application: 03.10.2007
(73) Proprietor: The Boeing Company, Chicago, IL 60606-1596 (US)
(72) Inventor: ADAMSON, Eric, E., Newcastle, Washington 98056-2064 (US); NELSON, Chester, P., Kirkland, Washington 98033-5576 (US)
(74) Representative: Bartelds, Erik
(86) International application number: PCT/US2006/001613
(87) International publication number: WO 2006/086124

(56) References cited:
- US-A- 3 391 884
- US-A- 4 354 646
- US-A- 5 740 984
- US-B1- 6 698 684
- US-B1- 6 824 092

## Description

### BACKGROUND

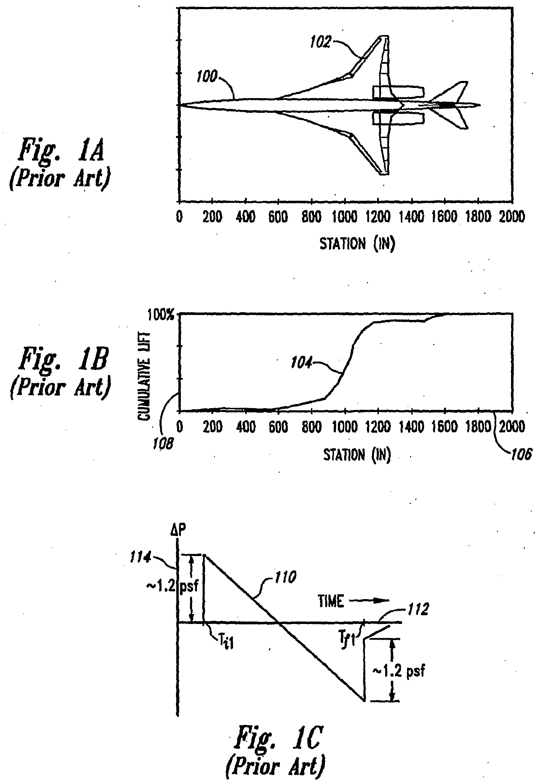

Current regulations prohibit any commercial supersonic flight over land. These regulations were formulated and promulgated at a time when supersonic aircraft caused sonic booms that were perceived by the public to be unacceptably loud. Figure 1A is a plan view of a conventional supersonic aircraft 100 configured in accordance with the prior art. The aircraft 100 includes a wing 102 having a moderate leading edge sweep on the order of 55 degrees, a trailing edge sweep of about 0 degrees, and an aspect ratio (AR) of greater than 2. These wing parameters are balanced to provide the aircraft 100 with good performance characteristics in both supersonic cruise and during take-off and landing.

Figures 1B and 1C are graphs illustrating a streamwise lift distribution 104 and a corresponding ground pressure signature 110, respectively, for the prior art aircraft 100 during supersonic flight (e.g., at a cruise Mach number of 1.6 and an altitude of 15000 m (50000 ft.)). In Figure 1B, longitudinal aircraft stations are measured along a horizontal axis 106, and cumulative lift is measured along a vertical axis 108. As this graph shows, the cumulative lift of the aircraft 100 increases dramatically between station 800 and station 1200. When propagated to the ground, the streamwise lift distribution 104 coalesces in the ground pressure signature 110 shown in Figure 1C.

In Figure 1C, time is measured along a horizontal axis 112 and pressure differential is measured along a vertical axis 114. As this graph illustrates, the ground pressure signature 110 of a conventional supersonic aircraft forms an N-wave with a substantial nose shock occurring at Tᵢ₁ and a corresponding tail shock occurring at T_{f1}. In the illustrated example, the nose shock has a magnitude of + 57 Pa (+1.2 pounds-per-square-foot (psf)) and the tail shock has a magnitude of -57 Pa (-1.2 psf).

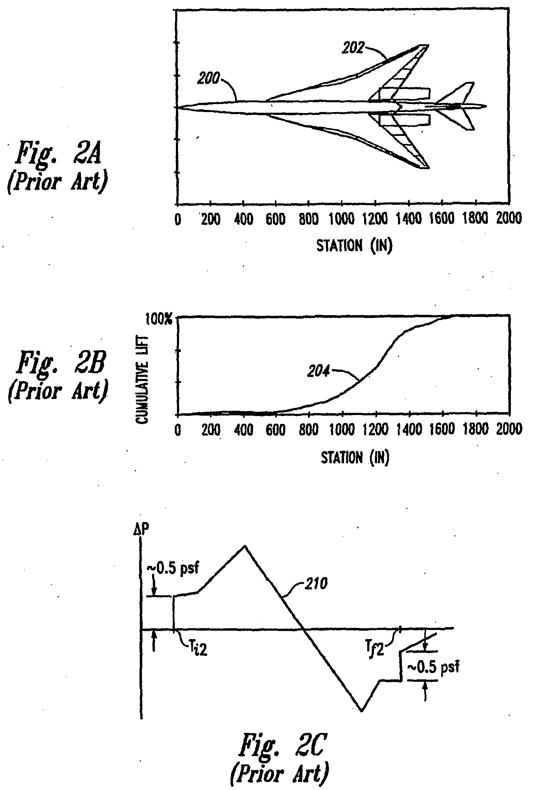

Since the 1960s, it has been known that one way to reduce the perceived noise levels of a sonic boom is to "shape" the ground pressure signature so that the intensity of the nose and tail shocks are reduced. Figure 2A, for example, is a plan view of a conventional low-boom supersonic aircraft 200 configured to produce a shaped ground pressure signature in accordance with the prior art. As is typical for such aircraft, the aircraft 200 has a thin wing 202 with highly swept leading and trailing edges. In the illustrated embodiment, for example, the wing 202 has a leading edge sweep of greater than 65 degrees, a trailing edge sweep of greater than 35 degrees, an AR of less than 2, and an airfoil thickness-to-chord ratio of less than four percent.

Figures 2B and 2C are graphs illustrating a streamwise lift distribution 204 and a corresponding ground pressure signature 210, respectively, for the prior art aircraft 200 during supersonic flight. As shown in Figure 2B, the streamwise lift distribution 204 increases relatively gradually from station 800 to station 1600, as compared to the streamwise lift distribution 104 of the aircraft 100 discussed above with reference to Figure 1A. This smoother and more gradual lift distribution results in the shaped ground pressure signature 210 illustrated in Figure 2C. The ground pressure signature 210 is "shaped" in the sense that the nose shock of +24 Pa (+.5 psf) occurring at Tᵢ₂ is substantially less than the nose shock of +57 Pa (+1.2 psf) occurring at Tᵢ₁ in Figure 1C. In addition, after the initial nose shock at Tᵢ₂, the ground pressure signature 210 ramps up gradually to a positive peak before ramping down gradually to a negative trough. The tail shock of -24 Pa (-.5 psf) occurring at time T_{f2} is also substantially less than the tail shock of -57 Pa (-1.2 psf) that occurs at time T_{f1} for the aircraft 100.

By reducing nose and tail shocks with wing sweep, commercial supersonic aircraft could, theoretically at least, achieve noise levels low enough to allow supersonic flight over land. Historically, however, these wing planforms have exhibited exceptionally poor stability and control characteristics at low speeds under take-off and landing conditions. In addition, these wing planforms also exacerbate the structural and aeroelastic/flutter problems inherent to most supersonic, thinwing designs. The net result is that while the sonic boom requirements may be satisfied, the resulting aircraft becomes economically and technically impractical. Consequently, most supersonic design studies have concluded that the economic and operational penalties (e.g., reduced cruise L/D, increased structural weight, poor take-off performance, flutter/aeroelastic challenges, poor stability and control characteristics, etc.) associated with such a design far outweigh the potential economic benefits of reduced overland trip-time.

The prior art document US 5 740 984 A discloses methods as defined in the preambles of claims 1 and 9, respectively, and an aircraft as defined in the preamble of claim 14. This document relates to a supersonic aircraft in which the shock wave in supersonic flight can be reduced by moving a lifting surface at the aircraft nose to a high lift configuration. This creates a pressure spike which serves to "flatten out" the overall pressure wave, thus decreasing both the slope and amplitude of the shock wave as it reaches the ground. This document further discloses that a surface at the rear of the aircraft may be moved together with the nose surface or as an alternative thereto, although this alternative is not further illustrated.

In US 6 824 092 B1 a supersonic aircraft is disclosed which is adapted to reduce the shock wave by adjusting the streamwise lift distribution through the use of so-called "ruddervators" at the trailing edge of an inverted V-tail. This aircraft also includes a blunt nose for creating a pressure spike, which serves the same purpose as in US 5 740 984 A discussed above.

The supersonic aircraft that is disclosed in US 6 698 684 B1 reduces the shock wave by extending a boom from the aircraft nose.

And finally, US 3 391 884 A discloses a supersonic aircraft in which the shock wave is reduced through deflection of the shock
wave by means of an additional surface, identified as deflector plate or vane, below the wing leading edge. This deflector plate or vane is movable between an extended effective position and a retracted ineffective position.

### SUMMARY

The following summary is provided for the benefit of the reader only, and does not limit the invention as set forth by the claims. The present invention is directed generally toward supersonic aircraft with active lift distribution control for reducing sonic boom.

A method for operating an aircraft in accordance with one aspect of the invention is defined in claim 1.

A method for operating an aircraft in accordance with another aspect of the invention is defined in claim 8.

Preferred ways of carrying out these methods form the subject matter of dependent claims 2-7 and 9-11, respectively.

Independent claim 12 defines an aircraft in accordance with the invention, while preferred embodiments of this aircraft form the subject matter of dependent claims 13-17.

As a result of the invention, the aircraft can be flown over land at supersonic speeds.

### BRIEF DESCRIPTION OF THE DRAWINGS

Figure 1A is a plan view of a conventional supersonic aircraft configured in accordance with the prior art, and Figures 1 B and 1C illustrate a streamwise lift distribution and a ground pressure signature, respectively, for the supersonic aircraft of Figure 1 A.
Figure 2A is a plan view of a conventional low-boom supersonic aircraft configured in accordance with the prior art, and Figures 2B and 2C illustrate a streamwise lift distribution and a shaped ground pressure signature, respectively, for the low-boom aircraft of Figure 2A.
Figure 3A is a partially schematic plan view of a supersonic aircraft having active lift distribution control for reducing sonic boom in accordance with an embodiment of the invention, and Figure 3B is a graph illustrating two streamwise lift distributions for the supersonic aircraft of Figure 3A.
Figures 4A-4E are end views of various aerodynamic control devices that can be used to actively control lift distribution in accordance with embodiments of the invention.
Figure 5 is a table comparing flight mode to lift control mode in accordance with an embodiment of the invention.
Figures 6A-6H are isometric top views of various supersonic aircraft configurations having active lift distribution control for reducing sonic boom in accordance with embodiments of the invention.

### DETAILED DESCRIPTION

The following disclosure describes various methods and apparatuses for actively controlling the distribution of lift generated by supersonic aircraft to reduce sonic boom. Certain details are set forth in the following description to provide a thorough understanding of various embodiments of the invention. Other details describing well-known structures and systems often associated with supersonic aircraft are not set forth, however, to avoid unnecessarily obscuring the description of the various embodiments of the invention.

Many of the details, dimensions, angles, and other features shown in the Figures are merely illustrative of particular embodiments of the invention. Accordingly, other embodiments can have other details, dimensions, angles and features without departing from the scope of the present invention. Furthermore, additional embodiments of the invention can be practiced without several of the details described below.

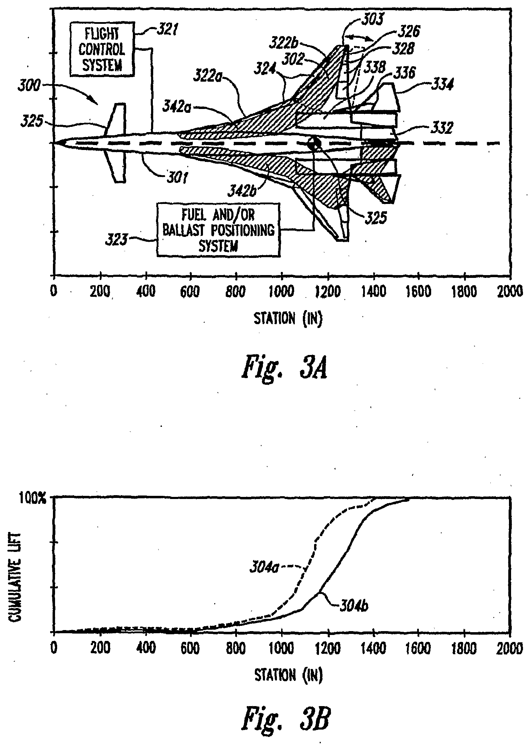

In the Figures, identical reference numbers identify identical or at least generally similar elements. To facilitate the discussion of any particular element, the most significant digit or digits of any reference number refer to the Figure in which that element is first introduced. For example, element 302 is first introduced and discussed with reference to Figure 3.

Figure 3A is a partially schematic plan view of a supersonic aircraft 300 configured in accordance with an embodiment of the invention, and Figure 3B is a graph illustrating a first streamwise lift distribution 304a and a second streamwise lift distribution 304b for the aircraft 300. Referring first to Figure 3A, the aircraft 300 includes a main wing 302 extending outwardly from an aft portion of a fuselage 301, and a forward wing or canard 325 extending outwardly from a forward portion of the fuselage 301. In the illustrated embodiment, the fuselage 301 is configured to carry a plurality of passengers. In other embodiments, however, the fuselage can be configured to carry other things including, for example, cargo, munitions, fuel, etc.

Two engine nacelles 338 provide thrust for the aircraft 301, and are positioned toward the aft portion of the fuselage 301. A vertical stabilizer 336 and a horizontal stabilizer 334 extend outwardly from each engine nacelle 338. An aft deck control surface 332 extends rearwardly between the engine nacelles 338.

The wing 302 can include an inboard leading edge portion 322a, an outboard leading edge portion 322b, and a trailing edge portion 326. In the illustrated embodiment, the average sweep angle of the leading edge portions 322 is about 55 degrees, and the sweep angle of the trailing edge portion 326 is about 0 degrees. When compared to the conventional low-boom supersonic aircraft of Figure 2A, the wing 302 has less sweep, a higher AR, and a greater airfoil thickness-to-chord ratio. As a result, the aircraft 300 can have better low speed performance, better stability characteristics, and less aerodynamic flutter concerns. In addition, the aircraft 300 can also have a lighter airframe.

In one aspect of this embodiment, the aircraft 300 includes a number of lift control devices that can be actively configured to change the streamwise lift distribution of the aircraft 300. These lift control devices can include, for example, leading edge control surfaces 324 (e.g., leading edge flaps), trailing edge control surfaces 328 (e.g., trailing edge flaps, ailerons, and/or elevons), the aft deck control surface 322, the horizontal stabilizer 334, and/or the canard 325. In addition to these lift control devices, an outboard wing portion 303 can be configured to pivot fore and aft relative to the fuselage 301, enabling the geometry or sweep of the wing 302 to be actively varied during flight.

In another aspect of this embodiment, the aircraft 300 further includes a flight control system 321 (shown schematically in Figure 3A) operably connected to one or more of the lift control devices described above. The flight control system 321 can be used to actively change the configuration of the lift control devices between a first configuration (e.g., a "high-boom" configuration) and a second configuration (e.g., a "low-boom" configuration). In the high-boom configuration shown in the top half of Figure 3A, the various lift control devices can be configured to concentrate 90% of the total lift of the aircraft 300 in a first cross-hatched region 342a. This results in the first streamwise lift distribution 304a shown in Figure 3B. The first streamwise lift distribution 304a offers the advantage of providing favorable low-speed flight characteristics in addition to favorable high-speed subsonic and supersonic performance. One disadvantage of the "high-boom" configuration, however, is that the first streamwise lift distribution 304a results in an N-wave ground pressure signature similar to the N-wave ground pressure signature 110 described above with reference to Figure 1C. Consequently, the aircraft 300 would produce an unacceptably loud sonic boom if it were flown over land in this configuration at supersonic speeds.

In the "low-boom" configuration shown in the bottom half of Figure 3A, the various lift control devices can be configured so that 90% of the total lift of the aircraft 300 is spread out over a second cross-hatched region 342b. This results in the second streamwise lift distribution 304b shown in Figure 3B. Comparing the second streamwise lift distribution 304b to the first streamwise lift distribution 304a reveals that the second streamwise lift distribution 304b is more spread out and increases more gradually than the first streamwise lift distribution 304a. As a result, when the second streamwise lift distribution 304b propagates to the ground, it produces a "shaped" ground pressure signature similar to the shaped ground pressure signature 210 described above with reference to Figure 2C. For a given weight, altitude, and Mach number, a shaped ground pressure signature causes less of a sonic boom than an N-wave ground pressure signature. Consequently, the aircraft 300 can be flown at supersonic speeds over land in the low-boom configuration without producing unacceptably loud sonic booms.

Changing the streamwise lift distribution of the aircraft 300 through active lift control can substantially alter the pitching moments or longitudinal "trim" of the aircraft 300. To compensate for this, the aircraft 300 can further include a fuel and/or ballast positioning system 323 ("positioning system 323") operably connected to the flight control system 321. The positioning system 323 can be configured to move fuel (e.g., fuel in one or more fuselage tanks - not shown) and/or ballast (also not shown) either fore or aft in response to commands from the flight control system 321 to move a center of gravity 325 (CG 325). For example, if a particular streamwise lift distribution causes a positive (i.e., nose-up) pitching moment, the flight control system 321 can command the positioning system 323 to retrim the aircraft 300 by moving the CG 325 forward. Conversely, if the streamwise lift distribution causes a negative (i.e., nose-down) pitching moment, the flight control system 321 can command the positioning system 323 to retrim the aircraft 300 by moving the CG 325 aft.

One feature of the embodiment described above with reference to Figures 3A and 3B is that the flight control system 321 can actively change the streamwise lift distribution of the aircraft 300 depending on the particular flight mode. For example, the flight control system 321 can position the lift control devices in the high-boom configuration (top half of Figure 3A) for high performance supersonic flight over water, or for subsonic flight (including take-off and landing). Alternatively, the flight control system 321 can position the lift control devices in the low-boom configuration (bottom half of Figure 3A) for supersonic flight over land. One advantage of this feature is that it enables commercial aircraft to fly over land at supersonic speeds without creating unacceptably loud sonic booms (low-boom configuration), while at the same time enabling the aircraft to fly over water at supersonic speeds without performance compromises (high-boom configuration). A further advantage of this feature is it enables the aircraft to land in the high-boom configuration without the stability and control compromises typically found in conventional supersonic commercial aircraft.

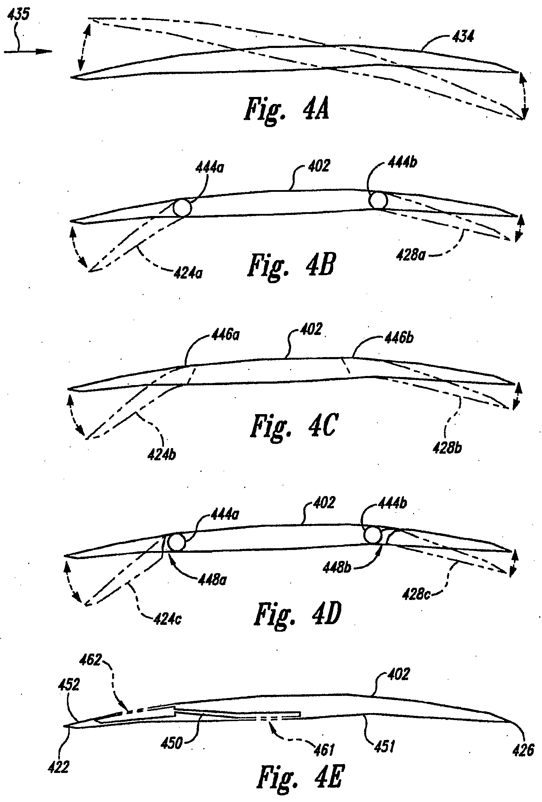

Figures 4A-4E are end views of various lift control devices that can be used to actively alter the streamwise lift distribution of the aircraft 300 of Figure 3A. Figure 4A, for example, illustrates a movable "slab" surface 434 that can be positioned at various angles-of-attack relative to a free stream 435. Various embodiments of the canard 325 and the horizontal stabilizer 334 of Figure 3A can be at least generally similar in structure and function to the movable slab surface 434.

Figure 4B is an end view of a wing 402 having a leading edge flap 424a and a trailing edge flap 428a. The leading edge flap 424a and the trailing edge flap 428a can pivot upwardly and/or downwardly about a first hinge 444a and a second hinge 444b, respectively, to alter the lift characteristics of the wing 402 as desired. In the illustrated embodiment, for example, the leading edge flap 424a and the trailing edge flap 428a are positioned in a low-boom mode in which the lift generated by the wing 402 is distributec toward a trailing edge portion 426.

Figure 4C is an end view of the wing 402 having a leading edge flap 424b and a trailing edge flap 428b. The leading edge flap 424b and the trailing edge flap 428b are at least generally similar in structure and function to their counterparts shown in Figure 4B. In the embodiment of Figure 4C, however, the leading edge flap 424b and the trailing edge flap 428b are pivotally attached to the wing 402 by a first flexible coupling 446a and a second flexible coupling 446b.

Figure 4D is an end view of the wing 402 having a "slotted" leading edge flap 424c and a slotted trailing edge flap 428c. The leading edge flap 424c and the trailing edge flap 428c are at least generally similar in structure and function to their counterparts described above with reference to Figures 4B and 4C. In the embodiment of Figure 4D, however, the leading edge flap 424c is spaced apart from a corresponding first hinge 444a by a first gap 448a, and the trailing edge flap 428c is spaced apart from a second hinge 444b by a second gap 448b. Various embodiments of the leading edge control surfaces 324 and the trailing edge control surfaces 328 of Figure 3A can be at least generally similar in structure and function to the leading edge flaps 424 and the trailing edge flaps 428, respectively, described above with reference to Figures 4B-4D.

Figure 4E is an end view of the wing 402 having a passage 450 extending from an inlet 461 positioned on a lower surface 451 to an outlet 462 positioned on an upper surface 452. The outlet 462 can be positioned proximate to a wing leading edge portion 422. In low-boom mode, the passage 450 can be open so that high pressure air from the lower surface 451 flows to the upper surface 452, thereby reducing the amount of lift generated by the wing leading edge portion 422, and shifting the lift distribution aftward toward the trailing edge portion 426.

The various lift control devices discussed above with reference to Figures 3A-4E represent some of the different types of devices that can be employed to alter the streamwise lift distribution of the aircraft 300. In other embodiments, however, other lift control devices can be employed to suit a particular aircraft configuration, mission profile, etc. Such devices can include, for example, suction devices, blowing devices, microelectromechanical devices, plasma flow devices, and various surface-mounted active flow control devices.

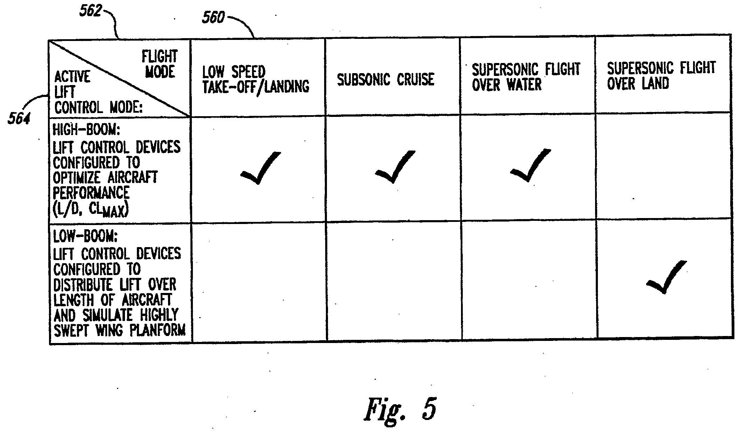

Figure 5 illustrates a table 560 listing the appropriate lift control mode of the aircraft 300 (Figure 3A) for various flight modes in accordance with an embodiment of the invention. The flight modes are listed across the top of table 560 in row 562, and the corresponding lift control modes are listed in column 564. As the table 560 shows, for low speed flight (e.g., during take-off and landing) the high-boom mode is selected. That is, the flight control system 321 configures the lift control devices to optimize aircraft performance (e.g., optimize UD, CLₘₐₓ, etc). As the table 560 further shows, the high-boom mode is also selected for subsonic cruise and supersonic flight over water because sonic boom is not a concern in these flight modes and, therefore, performance should be optimized. The high-boom mode is not selected for supersonic flight over land, however, because sonic boom is a concern in this flight mode and the resulting sonic boom would be too loud. For supersonic flight over land, the low-boom mode is selected. That is, the flight control system 321 configures the lift control devices to distribute the lift smoothly over the length of the aircraft and simulate a highly swept wing planform. In this configuration, the aircraft 300 can fly over land at supersonic speeds without causing an unacceptably loud sonic boom.

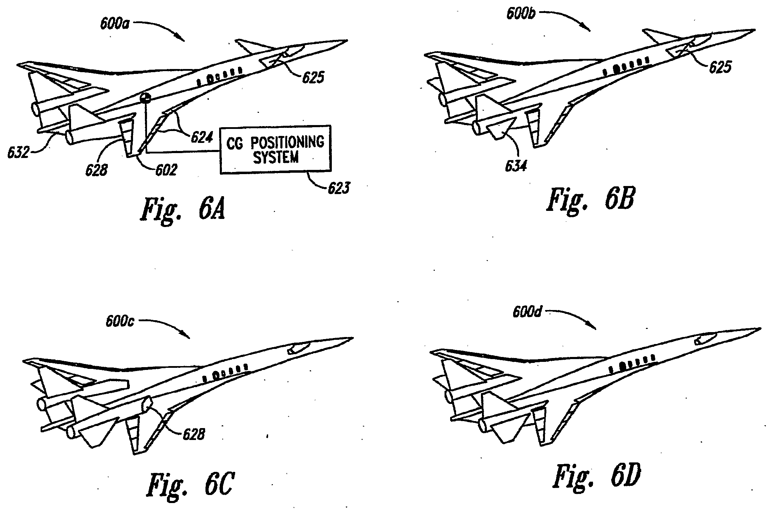

Figures 6A-6H are partially schematic, top isometric views of various aircraft configured in accordance with embodiments of the invention. Figure 6A, for example, illustrates a supersonic aircraft 600a that is similar to the aircraft 300 described above with reference to Figure 3A. The aircraft 600a includes a wing 602 having leading edge control surfaces 624 and trailing edge control surfaces 628. The aircraft 600a further includes a CG management system 623, a canard 625, and an aft deck control surface 632.

The configuration of the aircraft 600a offers a number of advantages for implementing the lift distribution control methods of the present invention. For example, the canard 625 allows a more aftward placement of the wing 602, thereby providing the aircraft 600a with a relatively long lifting length. Another advantage of this configuration is that the existence of three longitudinally-spaced lifting surfaces (i.e., the canard 625, the wing 602, and the aft deck control surface 632) enhances the ability to trim the aircraft 600a for a wider range of CG locations. Further, the additional lifting length provided by the aft deck surface 632 tends to lower sonic boom levels even when active lift control is not used. In addition, the continuity of lift provided by the contiguous aft deck surface 632 allows for smoother lift distribution and therefore smaller aerodynamic penalties when active lift control is employed to achieve lower sonic boom levels.

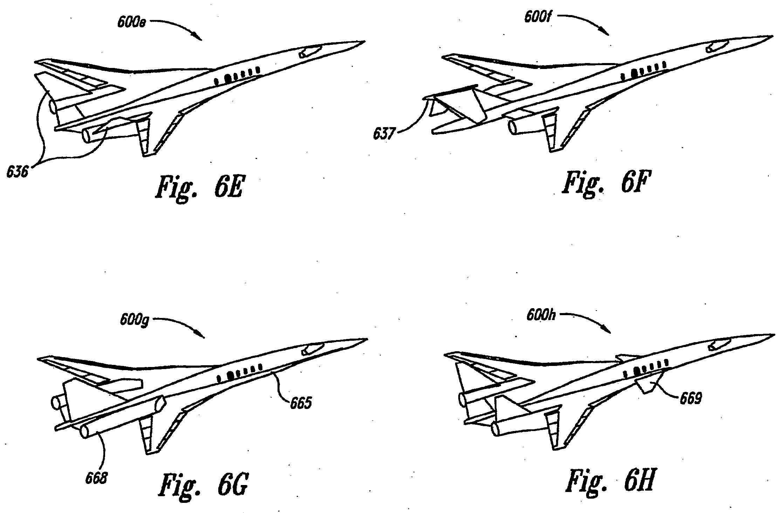

Figure 6B illustrates a supersonic aircraft 600b that is at least generally similar in structure and function to the aircraft 600a. The aircraft 600b1 however, further includes a horizontal stabilizer 634. Figure 6C illustrates a supersonic aircraft 600c that is at least generally similar in structure and function to the aircraft 600b. The aircraft 600c, however, lacks the canard 625 and includes over-wing inlets 628. Figure 6D illustrates a supersonic aircraft 600d that is at least generally similar to the aircraft 600b of Figure 6B, except that the canard 625 has been omitted. Figure 6E illustrates a supersonic aircraft 600e having a "V tail; and Figure 6F illustrates a supersonic aircraft 600f having an anhedral "T" tail 637. Figure 6G illustrates a supersonic aircraft 600g having over-wing inlets 668 and an extended strake 665. Figure 6H illustrates a supersonic aircraft 600h having a strake-canard 669.

Although the various aircraft described above with reference to Figures 6A-6H illustrate some of the different configurations that can be utilized to implement the active lift distribution control methods described herein, those of ordinary skill in the art will recognize that various aspects of the present invention can be utilized with other aircraft configurations. Accordingly, the various configurations described above are merely illustrative of the various aircraft configurations that can be used to implement the methods and systems taught herein.

From the foregoing, it will be appreciated that specific embodiments of the invention have been described herein for purposes of illustration, but that various modifications may be made without deviating from the scope of the appended claims.

## Claims

1. A method for operating an aircraft (300; 600), the method comprising:
flying the aircraft (300; 600) at a supersonic speed while the aircraft (300; 600) is in a first configuration;
changing the configuration of the aircraft (300; 600) from the first configuration to a second configuration, including changing the streamwise lift distribution (304) of the aircraft (300; 600) from a first streamwise lift distribution (304a) to a second streamwise lift distribution (304b);
and flying the aircraft (300; 600) at the supersonic speed while the aircraft (300; 600) is in the second configuration, wherein the aircraft (300; 600) produces a first sonic boom having a first noise level when the aircraft (300; 600) is flying at the supersonic speed in the first configuration, and wherein the aircraft (300; 600) produces a second sonic boom having a second noise level that is less than the first noise level when the aircraft (300; 600) is flying at the supersonic speed in the second configuration;
wherein changing the configuration of the aircraft (300; 600) from the first configuration to the second configuration includes moving a wing leading edge surface (324; 424; 624) of the aircraft (300; 600) from a first position to a second position, and moving a wing trailing edge surface (328; 428; 628) of the aircraft (300; 600) from a third position to a fourth position, in which the lift generated by the wing is distributed toward a trailing edge position thereof; and
in that the second streamwise lift distribution (304b) increases more gradually over a length of the aircraft (300; 600) than the first streamwise lift distribution (304a).

2. The method of claim 1, **characterized in that** changing the configuration of the aircraft (300; 600) from the first configuration to the second configuration includes changing the streamwise lift distribution (304) of the aircraft (300; 600) to shape the ground pressure signature (110; 210) of the aircraft (300; 600).

3. The method of claim 1 or 2, **characterized in that** changing the configuration of the aircraft (300; 600) from the first configuration to the second configuration includes moving an aft deck surface (332; 632) from a fifth position to a sixth position.

4. The method of any of the preceding claims, **characterized in that** changing the configuration of the aircraft (300; 600) from the first configuration to the second configuration includes moving a canard surface (325; 625) from a first position to a second position.

5. The method of any of the preceding claims, **characterized in that** changing the configuration of the aircraft (300; 600) from the first configuration to the second configuration includes moving a center of gravity (CG) of the aircraft (300; 600) from a first position to a second position.

6. The method of any of the preceding claims, **characterized in that** changing the configuration of the aircraft (300; 600) from the first configuration to the second configuration includes implementing an active flow control device on a wing (302; 402; 602) of the aircraft (300; 600).

7. The method of any of the preceding claims, **characterized in that** flying the aircraft (300; 600) at the supersonic speed while the aircraft (300; 600) is in the first configuration includes flying the aircraft (300; 600) over water while the aircraft (300; 600) is in the first configuration, and wherein flying the aircraft (300; 600) at the supersonic speed while the aircraft is in the second configuration includes flying the aircraft (300; 600) over land while the aircraft ((300; 600) is in the second configuration.

8. A method for operating an aircraft (300; 600), the method comprising:
configuring at least one lift control device to produce a first streamwise lift distribution (304a) of the aircraft (300; 600), the first streamwise lift distribution (304a) producing a first ground pressure signature (110) when the aircraft (300; 600) is flown at a supersonic speed, the first ground pressure signature (110) producing a first sonic boom having a first noise level;
flying the aircraft (300; 600) at a subsonic speed while the at least one lift control device is configured to produce the first streamwise lift distribution (304a);
configuring the at least one lift control device to produce a second streamwise lift distribution (304b) of the aircraft (300; 600) by moving a wing leading edge surface (324; 424; 624) from a first position to a second position, the second streamwise lift distribution (304b) producing a second ground pressure signature (210) when the aircraft (300; 600) is flown at the supersonic speed, the second ground pressure signature (210) producing a second sonic boom having a second noise level that is less than the first noise level; and
flying the aircraft (300; 600) at a supersonic speed while the at least one lift control device is configured to produce the second streamwise lift distribution (304b),
wherein configuring the at least one lift control device to produce the first streamwise lift distribution (304a) includes spreading the cumulative lift of the aircraft (300; 600) over a first distance, and wherein configuring the at least one lift control device to produce the second streamwise lift distribution (304b) includes moving a wing trailing edge surface (328; 428; 628) of the aircraft (300; 600) from a third position to a fourth position and spreading the lift of the aircraft over a second distance, the second distance being greater than the first distance.

9. The method of claim 8, **characterized in that** configuring the at least one lift control device to produce a first streamwise lift distribution (304a) includes configuring the lift control device to produce an N-shaped ground pressure signature (110), and wherein configuring the at least one lift control device to produce a second streamwise lift distribution (304b) includes configuring the lift control device to produce a shaped ground pressure signature (210).

10. The method of claim 8 or 9, **characterized in that** flying the aircraft (300; 600) at a supersonic speed while the at least one lift control device is configured to produce the second streamwise lift distribution (304b) includes flying the aircraft (300; 600) over land at the supersonic speed, and wherein the method further comprises flying the aircraft (300; 600) over water at the supersonic speed while the at least one lift control device is configured to produce the first streamwise lift distribution (304a).

11. The method of any of claims 8 to 10, **characterized by** moving a center of gravity (CG) of the aircraft (300; 600) from a first position to a second position after configuring the lift control device to produce a second streamwise lift distribution (304b).

12. An aircraft (300; 600) comprising:
fuselage means (301);
means for producing a first streamwise lift distribution (304a) while the aircraft (300; 600) is flying at a supersonic speed, the first streamwise lift distribution producing an N-shaped ground pressure signature (110), the N-shaped ground pressure signature (110) producing a first sonic boom having a first noise level; and
means for producing a second streamwise lift distribution (304b) while the aircraft (300; 600) is flying at the supersonic speed, the second streamwise lift distribution (304b) producing a shaped ground pressure signature (210), the shaped ground pressure signature (210) producing a second sonic boom having a second noise level that is less than the first noise level of the first sonic boom,
wherein the means for producing the second streamwise lift distribution (304b) includes a wing leading edge surface (324; 424; 624) that is movable from a first position to a second position and a wing trailing edge surface (328; 428; 628) that is movable from a third position to a fourth position in which the lift generated by the wing (402) is distributed toward a trailing edge portion (426) thereof while the aircraft (300; 600) is flying at the supersonic speed, such that the second streamwise lift distribution (304b) increases more gradually over a length of the aircraft (300; 600) than the first streamwise lift distribution (304a).

13. The aircraft (300; 600) of claim 12, **characterized in that** the means for producing a second streamwise lift distribution (304b) automatically produces the second streamwise lift distribution (304b) in response to a preselected flight speed.

14. The aircraft (300; 600) of claim 12 or 13, **characterized in that** the means for producing a second streamwise lift distribution (304b) includes a flight control system (321) operably connected to the wing leading and trailing edge surfaces (324, 328; 424, 428; 624, 628).

15. The aircraft (300; 600) of claim 14, **characterized in that** the means for producing a second streamwise lift distribution (304b) includes a fuel and/or ballast positioning system (323; 623) operably connected to the flight control system (321).

16. The aircraft (300; 600) of any of claims 12 to 15, **characterized in that** the means for producing a second streamwise lift distribution (304b) include an aft deck control surface (332; 632).

17. The aircraft (300; 600) of any of claims 12 to 16, **characterized in that** the fuselage means (301) include means for carrying a plurality of passengers.

## Patentansprüche

1. Verfahren zum Betrieb eines Luftfahrzeugs (300; 600), das Verfahren umfassend:
Fliegen des Luftfahrzeugs (300; 600) bei Überschallgeschwindigkeit, während das Luftfahrzeug (300; 600) sich in einer ersten Konfiguration befindet;
Ändern der Konfiguration des Luftfahrzeugs(300; 600) von der ersten Konfiguration zu einer zweiten Konfiguration, umfassend ein Ändern der Strömungsauftriebsverteilung (304) des Luftfahrzeugs (300; 600) von einer ersten Strömungsauftriebsverteilung (304a) zu einer zweiten Strömungsauftriebsverteilung (304b);
und Fliegen des Luftfahrzeugs (300; 600) bei Überschallgeschwindigkeit, während das Luftfahrzeug (300; 600) sich in der zweiten Konfiguration befindet, wobei das Luftfahrzeug (300; 600) einen ersten Überschallknall erzeugt, der einen ersten Geräuschpegel aufweist, wenn das Luftfahrzeug (300; 600) bei Überschallgeschwindikeit in der ersten Konfiguration fliegt, und wobei das Luftfahrzeug (300; 600) einen zweiten Überschallknall erzeugt, der einen zweiten Geräuschpegel aufweist, der niedriger als der erste Geräuschpegel ist, wenn das Luftfahrzeug (300; 600) bei Überschallgeschwindikeit in der zweiten Konfiguration fliegt;
wobei ein Ändern der Konfiguration des Luftfahrzeugs (300; 600) von der ersten Konfiguration zu der zweiten Konfiguration das Bewegen einer Flügelvorderkantenfläche (324; 424; 624) des Luftfahrzeugs (300; 600) von einer ersten Position zu einer zweiten Position umfasst, sowie das Bewegen einer Flügelhinterkantenfläche (328; 428; 628) des Luftfahrzeugs (300; 600) von einer dritten Position zu einer vierten Position, in der der von dem Flügel erzeugte Auftrieb in Richtung einer Hinterkantenposition desselben verteilt wird; und
bei der die zweite Strömungsauftriebsverteilung (304b) sich allmählicher als die erste Strömungsauftriebsverteilung (304a) über eine Länge des Luftfahrzeugs (300; 600) erhöht.

2. Verfahren gemäß Anspruch 1, **dadurch gekennzeichnet, dass** das Ändern der Konfiguration des Luftfahrzeugs (300; 600) von der ersten Konfiguration zu der zweiten Konfiguration das Ändern der Strömungsauftriebsverteilung (304) des Luftfahrzeugs (300; 600) umfasst, um die Bodendrucksignatur (110; 210) des Luftfahrzeugs (300; 600) zu formen.

3. Verfahren gemäß Anspruch 1 oder 2, **dadurch gekennzeichnet, dass** das Ändern der Konfiguration des Luftfahrzeugs (300; 600) von der ersten Konfiguration zu der zweiten Konfiguration das Bewegen einer Achterdeckoberfläche (332; 632) von einer fünften Position zu einer sechsten Position umfasst.

4. Verfahren gemäß einem der vorangegangenen Ansprüche, **dadurch gekennzeichnet, dass** das Ändern der Konfiguration des Luftfahrzeugs (300; 600) von der ersten Konfiguration zu der zweiten Konfiguration das Bewegen einer Canardoberfläche (325; 625) von einer ersten Position zu einer zweiten Position umfasst.

5. Verfahren gemäß einem der vorangegangenen Ansprüche, **dadurch gekennzeichnet, dass** das Ändern der Konfiguration des Luftfahrzeugs (300; 600) von der ersten Konfiguration zu der zweiten Konfiguration das Bewegen eines Schwerpunktes (CG, Center of Gravity) des Luftfahrzeugs (300; 600) von einer ersten Position zu einer zweiten Position umfasst.

6. Verfahren gemäß einem der vorangegangenen Ansprüche, **dadurch gekennzeichnet, dass** das Ändern der Konfiguration des Luftfahrzeugs (300; 600) von der ersten Konfiguration zu der zweiten Konfiguration das Implementieren einer aktiven Strömungssteuereinrichtung an einem Flügel (302; 402; 602) des Luftfahrzeugs (300; 600) umfasst.

7. Verfahren gemäß einem der vorangegangenen Ansprüche, **dadurch gekennzeichnet, dass** ein Fliegen des Luftfahrzeugs (300; 600) bei Überschallgeschwindigkeit, während das Luftfahrzeug (300; 600) sich in der ersten Konfiguration befindet, das Fliegen des Luftfahrzeugs (300; 600) über Wasser umfasst, während das Luftfahrzeug (300; 600) sich in der ersten Konfiguration befindet, und wobei das Fliegen des Luftfahrzeugs (300; 600) bei Überschallgeschwindigkeit, während das Luftfahrzeug sich in der zweiten Konfiguration befindet, das Fliegen des Luftfahrzeugs (300; 600) über Land umfasst, während das Luftfahrzeug (300; 600) sich in der ersten Konfiguration befindet.

8. Verfahren zum Betrieb eines Luftfahrzeugs (300; 600), das Verfahren umfassend:
Konfigurieren wenigstens einer Auftriebssteuereinrichtung, um eine erste Strömungsauftriebsverteilung (304a) des Luftfahrzeugs (300; 600) zu erzeugen, wobei die erste Strömungsauftriebsverteilung (304a) eine erste Bodendrucksignatur (110) erzeugt, wenn das Luftfahrzeug (300; 600) bei Überschallgeschwindigkeit geflogen wird, wobei die erste Bodendrucksignatur (110) einen ersten Ultraschallknall erzeugt, der einen ersten Geräuschpegel aufweist;
Fliegen des Luftfahrzeugs (300; 600) bei Unterschallgeschwindigkeit, während die wenigstens eine Auftriebssteuereinrichtung dazu konfiguriert ist, die erste Strömungsauftriebsverteilung (304a) zu erzeugen;
Konfigurieren der wenigstens einen Auftriebssteuereinrichtung, um eine zweite Strömungsauftriebsverteilung (304b) des Luftfahrzeugs (300; 600) durch Bewegen einer Flügelvorderkantenfläche (324; 424; 624) von einer ersten Position zu einer zweiten Position zu erzeugen, wobei die zweite Strömungsauftriebsverteilung (304b) eine zweite Bodendrucksignatur (210) erzeugt, wenn das Luftfahrzeug (300; 600) bei Überschallgeschwindigkeit geflogen wird, wobei die zweite Bodendrucksignatur (210) einen zweiten Ultraschallknall erzeugt, der einen zweiten Geräuschpegel aufweist, der niedriger als der erste Geräuschpegel ist; und
Fliegen des Luftfahrzeugs (300; 600) bei Überschallgeschwindigkeit, während die wenigstens eine Auftriebssteuereinrichtung dazu konfiguriert ist, die zweite Strömungsauftriebsverteilung (304b) zu erzeugen,
wobei das Konfigurieren der wenigstens einen Auftriebssteuereinrichtung, um die erste Strömungsauftriebsverteilung (304a) zu erzeugen, ein Verteilen des kumulativen Auftriebs des Luftfahrzeugs (300; 600) über eine erste Entfernung umfasst, und wobei das Konfigurieren der wenigstens einen Auftriebssteuereinrichtung, um eine zweite Strömungsauftriebsverteilung (304b) zu erzeugen, das Bewegen einer Flügelhinterkantenfläche (328; 428; 628) des Luftfahrzeugs (300; 600) von einer dritten Position zu einer vierten Position und ein Verteilen des Auftriebs des Luftfahrzeugs über eine zweite Entfernung umfasst, wobei die zweite Entfernung größer als die erste Entfernung ist.

9. Verfahren gemäß Anspruch 8, **dadurch gekennzeichnet, dass** das Konfigurieren der wenigstens einen Auftriebssteuereinrichtung, um eine erste Strömungsauftriebsverteilung (304a) zu erzeugen, das Konfigurieren der Auftriebssteuereinrichtung, um eine N-förmige Bodendrucksignatur (110) zu erzeugen, umfasst, und wobei das Konfigurieren der wenigstens einen Auftriebssteuereinrichtung, um eine zweite Strömungsauftriebsverteilung (304b) zu erzeugen, das Konfigurieren der Auftriebssteuereinrichtung, um eine geformte Bodendrucksignatur (210) zu erzeugen, umfasst.

10. Verfahren gemäß Anspruch 8 oder 9, **dadurch gekennzeichnet, dass** das Fliegen des Luftfahrzeugs (300; 600) bei Überschallgeschwindigkeit, während die wenigstens eine Auftriebssteuereinrichtung dazu konfiguriert ist, die zweite Strömungsauftriebsverteilung (304b) zu erzeugen, ein Fliegen des Luftfahrzeugs (300; 600) über Land bei Überschallgeschwindigkeit umfasst, und wobei das Verfahren weiterhin das Fliegen des Luftfahrzeugs (300; 600) über Wasser bei Überschallgeschwindigkeit umfasst, während die wenigstens eine Auftriebssteuereinrichtung dazu konfiguriert ist, die erste Strömungsauftriebsverteilung (304a) zu erzeugen.

11. Verfahren gemäß einem der Ansprüche 8 bis 10, **gekennzeichnet durch** das Bewegen eines Schwerpunktes (CG) des Luftfahrzeugs (300; 600) von einer ersten Position zu einer zweiten Position, nachdem die Auftriebssteuereinrichtung dazu konfiguriert wurde, eine zweite Strömungsauftriebsverteilung (304b) zu erzeugen.

12. Luftfahrzeug (300; 600), umfassend:
eine Rumpfeinrichtung (301);
eine Einrichtung zum Erzeugen einer ersten Strömungsauftriebsverteilung (304a), während das Luftfahrzeug (300; 600) bei Überschallgeschwindigkeit fliegt, wobei die erste Strömungsauftriebsverteilung eine N-förmige Bodendrucksignatur (110) erzeugt, wobei die N-förmige Bodendrucksignatur (110) einen ersten Überschallknall erzeugt, der einen ersten Geräuschpegel aufweist; und
eine Einrichtung zum Erzeugen einer zweiten Strömungsauftriebsverteilung (304b), während das Luftfahrzeug (300; 600) bei Überschallgeschwindigkeit fliegt, wobei die zweite Strömungsauftriebsverteilung (304b) eine geformte Bodendrucksignatur (210) erzeugt, wobei die geformte Bodendrucksignatur (210) einen zweiten Ultraschallknall erzeugt, der einen zweiten Geräuschpegel aufweist, der niedriger als der Geräuschpegel des ersten Überschallknalls ist,
wobei die Einrichtung zur Erzeugung der zweiten Strömungsauftriebsverteilung (304b) umfasst: eine Flügelvorderkantenfläche (324; 424; 624), die von einer ersten Position zu einer zweiten Position bewegt werden kann, und eine Flügelhinterkantenfläche (328; 428; 628), die von einer dritten Position zu einer vierten Position bewegt werden kann, bei der der von dem Flügel (402) erzeugte Auftrieb in Richtung einer Hinterkantenposition (426) desselben verteilt wird, während das Luftfahrzeug (300; 600) bei Überschallgeschwindigkeit fliegt, so dass die zweite Strömungsauftriebsverteilung (304b) sich allmählicher als die erste Strömungsauftriebsverteilung (304a) über eine Länge des Luftfahrzeugs (300; 600) erhöht.

13. Luftfahrzeug (300; 600) gemäß Anspruch 12, **dadurch gekennzeichnet, dass** die Einrichtung zum Erzeugen einer zweiten Strömungsauftriebsverteilung (304b) die zweite Strömungsauftriebsverteilung (304b) als Reaktion auf eine vorausgewählte Fluggeschwindigkeit automatisch erzeugt.

14. Luftfahrzeug (300; 600) gemäß Anspruch 12, **dadurch gekennzeichnet, dass** die Einrichtung zum Erzeugen einer zweiten Strömungsauftriebsverteilung (304b) ein Flugsteuerungssystem (321) umfasst, das betriebsfähig mit den Flügelvorder- und Flügelhinterkantenflächen (324, 328; 424, 428; 624, 628) verbunden ist.

15. Luftfahrzeug (300; 600) gemäß Anspruch 14, **dadurch gekennzeichnet, dass** die Einrichtung zum Erzeugen einer zweiten Strömungsauftriebsverteilung (304b) ein Brennstoff- und/oder Ballast-Positioniersystem (323; 623) umfasst, das betriebsfähig mit dem Flugsteuerungssystem (321) verbunden ist.

16. Luftfahrzeug (300; 600) gemäß einem der Ansprüche 12 bis 15, **dadurch gekennzeichnet, dass** die Einrichtung zum Erzeugen einer zweiten Strömungsauftriebsverteilung (304b) eine Achterdecksteuerungsoberfläche (332; 632) umfasst.

17. Luftfahrzeug (300; 600) gemäß einem der Ansprüche 12 bis 16, **dadurch gekennzeichnet, dass** die Rumpfeinrichtung (301) eine Einrichtung zum Transportieren von einer Mehrzahl von Fluggästen umfasst.

## Revendications

1. Procédé de fonctionnement d'un aéronef (300 ; 600), le procédé comprenant :
l'opération consistant à faire voler l'aéronef (300 ; 600) à une vitesse supersonique tandis que l'aéronef (300 ; 600) se trouve sous une première configuration ;
l'opération consistant à modifier la configuration de l'aéronef (300 ; 600) de la première configuration en une deuxième configuration, comportant la modification de la distribution de portance longitudinale (304) de l'aéronef (300 ; 600) d'une première distribution de portance longitudinale (304a) en une deuxième distribution de portance longitudinale (304b) ;
et l'opération consistant à faire voler l'aéronef (300 ; 600) à la vitesse supersonique tandis que l'aéronef (300 ; 600) se trouve sous la deuxième configuration, l'aéronef (300 ; 600) produisant un premier bang sonique présentant un premier niveau sonore lorsque l'aéronef (300 ; 600) vole à la vitesse supersonique sous la première configuration, et l'aéronef (300 ; 600) produisant un second bang sonique présentant un second niveau sonore inférieur au premier niveau sonore lorsque l'aéronef (300 ; 600) vole à la vitesse supersonique sous la deuxième configuration ;
dans lequel la modification de la configuration de l'aéronef (300 ; 600) de la première configuration en la deuxième configuration comporte le passage d'une surface de bord d'attaque d'aile (324 ; 424 ; 624) de l'aéronef (300 ; 600) d'une première position à une deuxième position, et le passage d'une surface de bord de fuite d'aile (328 ; 428 ; 628) de l'aéronef (300 ; 600) d'une troisième position à une quatrième position, à laquelle la portance générée par l'aile est distribuée vers une position de bord de fuite de celle-ci ; et
dans lequel la deuxième distribution de portance longitudinale (304b) augmente de manière plus graduelle sur la longueur de l'aéronef (300 ; 600) qu'il n'en est le cas pour la première distribution de portance longitudinale (304a).

2. Procédé selon la revendication 1, **caractérisé en ce que** la modification de la configuration de l'aéronef (300 ; 600) de la première configuration en la deuxième configuration comporte la modification de la distribution de portance longitudinale (304) de l'aéronef (300 ; 600) pour donner une forme à la signature de pression au sol (110 ; 210) de l'aéronef (300 ; 600).

3. Procédé selon la revendication 1 ou 2, **caractérisé en ce que** la modification de la configuration de l'aéronef (300 ; 600) de la première configuration en la deuxième configuration comporte le passage d'une surface de pont arrière (332 ; 632) d'une cinquième position à une sixième position.

4. Procédé selon l'une quelconque des revendications précédentes, **caractérisé en ce que** la modification de la configuration de l'aéronef (300 ; 600) de la première configuration en la deuxième configuration comporte le passage d'un empennage avant (325 ; 625) d'une première position à une deuxième position.

5. Procédé selon l'une quelconque des revendications précédentes, **caractérisé en ce que** la modification de la configuration de l'aéronef (300 ; 600) de la première configuration en la deuxième configuration comporte le passage du centre de gravité (CG) de l'aéronef (300 ; 600) d'une première position à une deuxième position.

6. Procédé selon l'une quelconque des revendications précédentes, **caractérisé en ce que** la modification de la configuration de l'aéronef (300 ; 600) de la première configuration en la deuxième configuration comporte la mise en oeuvre d'un dispositif de commande de flux actif sur une aile (302 ; 402 ; 602) de l'aéronef (300 ; 600).

7. Procédé selon l'une quelconque des revendications précédentes, **caractérisé en ce que** l'opération consistant à faire voler l'aéronef (300 ; 600) à la vitesse supersonique tandis que l'aéronef (300 ; 600) se trouve sous la première configuration comporte l'opération consistant à faire voler l'aéronef (300 ; 600) au-dessus de l'eau tandis que l'aéronef (300 ; 600) se trouve sous la première configuration, l'opération consistant à faire voler l'aéronef (300 ; 600) à la vitesse supersonique tandis que l'aéronef se trouve sous la deuxième configuration comportant l'opération consistant à faire voler l'aéronef (300 ; 600) au-dessus du sol tandis que l'aéronef ((300 ; 600) se trouve sous la deuxième configuration.

8. Procédé de fonctionnement d'un aéronef (300 ; 600), le procédé comprenant :
l'opération consistant à configurer au moins un dispositif de commande de portance afin de produire une première distribution de portance longitudinale (304a) de l'aéronef (300 ; 600), la première distribution de portance longitudinale (304a) produisant une première signature de pression au sol (110) lorsque l'aéronef (300 ; 600) vole à une vitesse supersonique, la première signature de pression au sol (110) produisant un premier bang sonique présentant un premier niveau sonore ;
l'opération consistant à faire voler l'aéronef (300 ; 600) à une vitesse subsonique tandis que l'au moins un dispositif de commande de portance est configuré pour produire la première distribution de portance longitudinale (304a) ;
l'opération consistant à configurer l'au moins un dispositif de commande de portance afin de produire une deuxième distribution de portance longitudinale (304b) de l'aéronef (300 ; 600) en faisant passer une surface de bord d'attaque d'aile (324 ; 424 ; 624) d'une première position à une deuxième position, la deuxième distribution de portance longitudinale (304b) produisant une deuxième signature de pression au sol (210) lorsque l'aéronef (300 ; 600) vole à la vitesse supersonique, la deuxième signature de pression au sol (210) produisant un second bang sonique présentant un second niveau sonore inférieur au premier niveau sonore ; et
l'opération consistant à faire voler l'aéronef (300 ; 600) à une vitesse supersonique tandis que l'au moins un dispositif de commande de portance est configuré pour produire la deuxième distribution de portance longitudinale (304b),
dans lequel la configuration de l'au moins un dispositif de commande de portance visant à produire la première distribution de portance longitudinale (304a) comporte l'opération consistant à étaler la portance cumulée de l'aéronef (300 ; 600) sur une première distance, et la configuration de l'au moins un dispositif de commande de portance visant à produire la deuxième distribution de portance longitudinale (304b) comporte le passage d'une surface de bord de fuite d'aile (328 ; 428 ; 628) de l'aéronef (300 ; 600) d'une troisième position à une quatrième position et l'étalement de la portance de l'aéronef sur une deuxième distance, la deuxième distance étant supérieure à la première distance.

9. Procédé selon la revendication 8, **caractérisé en ce que** la configuration de l'au moins un dispositif de commande de portance visant à produire une première distribution de portance longitudinale (304a) comporte la configuration du dispositif de commande de portance pour produire une signature de pression au sol en forme de N (110), la configuration de l'au moins un dispositif de commande de portance visant à produire une deuxième distribution de portance longitudinale (304b) comportant la configuration du dispositif de commande de portance pour produire une signature de pression au sol formée (210).

10. Procédé selon la revendication 8 ou 9, **caractérisé en ce que** l'opération consistant à faire voler l'aéronef (300 ; 600) à une vitesse supersonique tandis que l'au moins un dispositif de commande de portance est configuré pour produire la deuxième distribution de portance longitudinale (304b) comporte l'opération consistant à faire voler l'aéronef (300 ; 600) au-dessus du sol à la vitesse supersonique, le procédé comprenant en outre l'opération consistant à faire voler l'aéronef (300 ; 600) au-dessus de l'eau à la vitesse supersonique tandis que l'au moins un dispositif de commande de portance est configuré pour produire la première distribution de portance longitudinale (304a).

11. Procédé selon l'une quelconque des revendications 8 à 10, **caractérisé par** le passage du centre de gravité (CG) de l'aéronef (300 ; 600) d'une première position à une deuxième position suite à la configuration du dispositif de commande de portance visant à produire une deuxième distribution de portance longitudinale (304b).

12. Aéronef (300 ; 600) comprenant :
un moyen de fuselage (301) ;
un moyen destiné à produire une première distribution de portance longitudinale (304a) tandis que l'aéronef (300 ; 600) vole à une vitesse supersonique, la première distribution de portance longitudinale produisant une signature de pression au sol en forme de N (110), la signature de pression au sol en forme de N (110) produisant un premier bang sonique présentant un premier niveau sonore ; et
un moyen destiné à produire une deuxième distribution de portance longitudinale (304b) tandis que l'aéronef (300 ; 600) vole à la vitesse supersonique, la deuxième distribution de portance longitudinale (304b) produisant une signature de pression au sol formée (210), la signature de pression au sol formée (210) produisant un second bang sonique présentant un second niveau sonore inférieur au premier niveau sonore du premier bang sonique,
dans lequel le moyen de production de la deuxième distribution de portance longitudinale (304b) comporte une surface de bord d'attaque d'aile (324 ; 424 ; 624) qui est susceptible de passer d'une première position à une deuxième position et une surface de bord de fuite d'aile (328 ; 428 ; 628) qui est susceptible de passer d'une troisième position à une quatrième position à laquelle la portance générée par l'aile (402) est distribuée vers une partie de bord de fuite (426) de celle-ci tandis que l'aéronef (300 ; 600) vole à la vitesse supersonique, si bien que la deuxième distribution de portance longitudinale (304b) augmente de manière plus graduelle sur la longueur de l'aéronef (300 ; 600) qu'il n'en est le cas pour la première distribution de portance longitudinale (304a).

13. Aéronef (300 ; 600) selon la revendication 12, **caractérisé en ce que** le moyen de production d'une deuxième distribution de portance longitudinale (304b) produit automatiquement la deuxième distribution de portance longitudinale (304b) en réaction à une vitesse de vol présélectionnée.

14. Aéronef (300 ; 600) selon la revendication 12 ou 13, **caractérisé en ce que** le moyen de production d'une deuxième distribution de portance longitudinale (304b) comporte un système de commandes de vol (321) en liaison fonctionnelle avec les surfaces de bord d'attaque et de fuite d'aile (324, 328 ; 424, 428 ; 624, 628).

15. Aéronef (300 ; 600) selon la revendication 14, **caractérisé en ce que** le moyen de production d'une deuxième distribution de portance longitudinale (304b) comporte un système de placement de carburant et/ou de ballast (323 ; 623) en liaison fonctionnelle avec le système de commandes de vol (321).

16. Aéronef (300 ; 600) selon l'une quelconque des revendications 12 à 15, **caractérisé en ce que** le moyen de production d'une deuxième distribution de portance longitudinale (304b) comprend une surface de commande de pont arrière (332 ; 632).

17. Aéronef (300 ; 600) selon l'une quelconque des revendications 12 à 16, **caractérisé en ce que** le moyen de fuselage (301) comprend un moyen permettant de porter une pluralité de passagers.
